# EUROPEAN PATENT APPLICATION

(11) **EP 2 581 424 A1**
(43) Date of publication of application: **17.04.2013**
(21) Application number: 11792490.2
(22) Date of filing: 08.06.2011
(51) Int. Cl.: C09J 7/02, B32B 27/00, B32B 27/30, C09J 133/04, C09J 153/00

(54) **ADHESIVE SHEET**

(30) Priority: 11.06.2010 JP 2010133527
(71) Applicant: Nitto Denko Corporation, Ibaraki-shi, Osaka 567-8680 (JP)
(72) Inventor: TAKEDA, Kouhei, Ibaraki-shi Osaka 567-8680 (JP); HAYASHI, Keiji, Ibaraki-shi Osaka 567-8680 (JP)
(74) Representative: Grünecker, Kinkeldey, Stockmair & Schwanhäusser
(86) International application number: PCT/JP2011/063155
(87) International publication number: WO 2011/155533

(57) **Abstract**

Provided is a PSA sheet formed by co-extrusion of a PSA layer and a layer (release layer) releasable from the PSA layer, wherein the PSA layer comprises an acrylic polymer as its base polymer. A PSA sheet 10 comprises a middle layer 12 that comprises an acrylic block copolymer as its base polymer and is adhesive at 23 °C, a release layer 14 that is laminated on a first face 12A of the middle layer 12 and is releasable from the middle layer, and a non-releasing layer 16 that is laminated on a second face 12B of the middle layer 12 and is non-releasable relative to the middle layer. The non-releasing layer 16 may be adhesive or non-adhesive at 23 °C.

## Description

### [Technical Field]

The present invention relates to a pressure-sensitive adhesive (PSA) sheet comprising a PSA layer comprising an acrylic block copolymer as its base polymer. The present application claims priority to Japanese Patent Application No. 2010-133527 filed on June 11th, 2010, and the entire contents of the application are incorporated in the present application as reference.

### [Background Art]

An acrylic polymer is preferred as a base polymer of PSA because it has excellent transparency and weatherability, and may exhibit diverse properties depending on its monomer composition and polymer structure. For example, there has been proposed a PSA prepared with an acrylic block copolymer as its base polymer, with the copolymer being made up with two or more connected blocks, each comprising an acrylic monomer as its primary monomer. Technical literatures relating to this type of PSA include Patent Documents 1 to 8. Patent Documents 9 and 10 are technical literatures relating to an acrylic block copolymer for use in a molding material, etc. Patent Document 11 is a technical literature relating to a multi-layered film constituted to have an acrylic block copolymer layer on one face of a crystalline resin layer, or to have an acrylic block copolymer layer adhesively integrated between two crystalline resin layers.

### [Citation List]

### [Patent Literatures]

Patent Document 1: Japanese Patent Application Publication No. 2001-234146
Patent Document 2: Japanese Patent Application Publication No. 2001-348553
Patent Document 3: Japanese Patent Application Publication No. H09-125019
Patent Document 4: Japanese Patent Application Publication No. 2005-307063
Patent Document 5: Japanese Patent Application Publication No. H11-323072
Patent Document 6: Japanese Patent Application Publication No. 2003-105300
Patent Document 7: Japanese Patent Application Publication No. 2009-102467
Patent Document 8: Japanese Patent Application Publication No. 2009-249541
Patent Document 9: Japanese Patent Application Publication No. 2002-97238
Patent Document 10: Japanese Patent Application Publication No. 2005-54065
Patent Document 11: Japanese Patent Application Publication No. 2009-125985
Patent Document 12: Japanese Patent Application Publication No. 2007-185781

### [Summary of Invention]

### Technical Problem]

Patent Document 12 describes a surface protection film comprising a release layer (A) formed of a polyamide-based resin, a PSA layer (B) formed of a non-crystalline α-olefin-based polymer and a propylene-based polymer, and a substrate layer (C) formed of a thermoplastic resin that have been co-extruded in order of (A)(B)(C). It describes that a surface protection film in such a constitution is highly clean on the film's adhesive surface because the release layer is laminated by co-extrusion on the adhesive surface that will be adhered to an adherend and the adhesive surface is shut off from the air prior to use (paragraph 0011, etc., of Patent Document 12).

However, in a constitution with a PSA layer comprising an acrylic polymer as its base polymer, there has not yet been a practical PSA sheet comprising the said PSA layer and a release layer laminated by co-extrusion. In the constitution according to Patent Document 12, changing the composition of the PSA layer (B) to an acrylic block copolymer and co-extruding with this acrylic block copolymer the polyamide-based resin used to form the release layer (A) in Patent Document 12 will result in a laminate film where the polyamide-based resin layer does not function as a release liner for the acrylic block copolymer layer (PSA layer) (i.e., the polyamide-based resin layer cannot be adequately peeled off from the PSA layer).

An objective of the present invention is to provide a PSA sheet comprising an adhesive middle layer and a layer (release layer) releasable from the middle layer that have been co-extruded, wherein the middle layer comprises an acrylic polymer as its base polymer.

### [Solution to Problem]

The present invention provides a PSA sheet comprising a middle layer that is adhesive at 23 °C, a release layer laminated on a first face of the middle layer, and a non-releasing layer laminated on a second face of the middle layer, with these layers having being co-extruded. The middle layer comprises an acrylic block copolymer as its base polymer. The release layer is releasable from the middle layer. The non-releasing layer is not releasable relative to the middle layer. The non-releasing layer may or may not be adhesive at 23 °C. Because the middle layer comprises an acrylic block copolymer as its base polymer, it may be of excellent transparency, taking advantage of characteristics of an acrylic polymer. The release layer may function as a release liner for the middle layer. Thus, with a PSA sheet of this constitution, the release layer can be removed from the middle layer and the surface (first face) of the middle layer can be used as a surface pressure-sensitively adhesive to an adherend. The adhesive surface is protected by the release layer which, in the process of molding of the PSA sheet, has been co-extruded with the middle layer to be laminated on top of the adhesive surface. Since the adhesive surface would not be exposed to the outside until this release layer is removed, the adhesive surface can be kept clean. Therefore, the good adhesive properties are more likely to be stored until its use and dust collection on the adhesive surface can be avoided, giving rise to good external quality as well. This is especially advantageous when the adhesive surface is adhered to an adherend that is light-transmitting (typically, transparent and colorless or colored), or when the non-releasing layer is formed of a material having a light transmittance.

The acrylic block copolymer as the base polymer of the middle layer may be, for instance, a block copolymer comprising at least one acrylate block and at least one methacrylate block. An acrylic block copolymer having such a structure is suitable for combining high levels of extrudability and adhesive properties in the middle layer.

The acrylic block copolymer constituting the middle layer may have a weight average molecular weight (Mw) of, for instance, 3 × 10⁴ to 30 × 10⁴. An acrylic block copolymer having such a Mw is suitable for combining high levels of extrudability and adhesive properties in the middle layer.

In the release layer, at least the middle-layer-side surface (release face) is preferably constituted with a release-surface-forming composition comprising a polyolefin as its primary component. A release layer of such a constitution may exhibit excellent releasability from the middle layer (adhesive surface). In a preferable embodiment, the entire release layer is formed of a composition comprising a polyolefin as its primary component. As the polyolefin, a polyethylene (PE) can be preferably used. Preferred examples of the polyolefin include a low-density polyethylene (LLDPE) and a linear low-density polyethylene (LLDPE).

The non-releasing layer may be formed of a non-releasing-layer-forming composition comprising an acrylic block copolymer as its base polymer. A non-releasing layer having such a composition may have excellent transparency as a characteristic of an acrylic polymer. Therefore, when the non-releasing layer is non-adhesive, the release layer is removed from the middle layer and the resulting laminate of the non-releasing layer (substrate) and the middle layer (PSA layer) can be preferably used as an adhesively single-faced PSA film of excellent transparency. When the non-releasing layer is adhesive, the release layer is removed from the middle layer and the resulting laminate of the non-releasing layer (first PSA layer) and the middle layer (second PSA layer) can be preferably used as a adhesively double-faced PSA film of excellent transparency.

The release layer may have a thickness of, for instance, about 10 µm to 500 µm, A release layer of such a thickness provides excellent handling during release from an adhesive surface. A PSA sheet comprising a release layer of such a thickness may exhibit flexibility suitable for storing and transporting in a form of a roll (in a form of a PSA sheet roll).

In a preferable embodiment of the PSA sheet disclosed herein, when the release layer is peeled off from the middle layer at a measurement temperature of 23 °C, a tensile speed of 10 m/min and a peel angle of 180°, it exhibits a peel strength of 5.0 N/20mm or smaller. A PSA sheet exhibiting such a peel strength is preferable because its release layer exhibits excellent releasability.

In another preferable embodiment of the PSA sheet disclosed herein, the middle layer exhibits an adhesive strength relative to a stainless steel plate (SUS plate) of 1.0 N/20mm or greater at a measurement temperature of 23 °C, a tensile speed of 300 mm/min and a peel angle of 180°. A PSA sheet exhibiting such an adhesive strength is preferable because of its excellent adhesive properties.

A PSA sheet disclosed herein comprises a middle layer exhibiting excellent transparency as well as being adhesive while it has a constitution suitable for keeping the adhesive surface of the middle layer clean until use (until adhesion); and therefore, it is preferred as a PSA sheet adhered to an optical part (as an adhesively double-faced PSA sheet used to adhere optical parts together, or as a PSA sheet for surface protection used to protect surfaces of optical parts) and so on.

### [Brief Description of Drawings]

Figure 1 shows a schematic diagram illustrating an example of constitutions of the PSA sheet according to the present invention.
Figure 2 shows a schematic diagram illustrating another example of constitutions of the PSA sheet according to the present invention.

### [Description of Embodiments]

Preferred embodiments of the present invention are described below. Matters necessary to practice this invention other than those specifically referred to in this description may be understood as design matters to a person of ordinary skill in the art based on the conventional art in the pertinent field. The present invention can be practiced based on the contents disclosed in this description and common technical knowledge in the subject field.

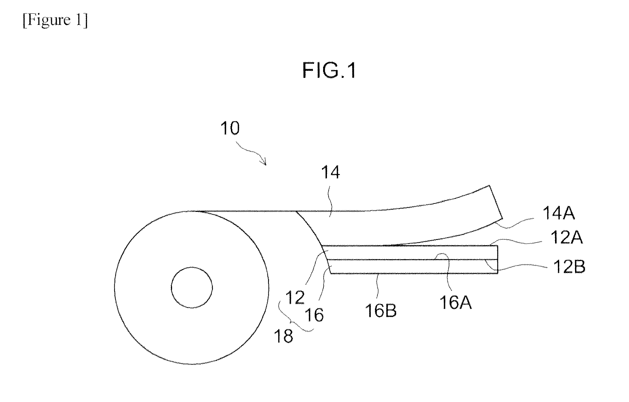

Figure 1 schematically shows an example of typical constitutions of the PSA sheet provided by the present invention. This PSA sheet 10 comprises a middle layer 12 comprising an acrylic block copolymer as its base polymer, a release layer 14 laminated on a first face 12A of the middle layer 12, and a non-releasing layer 16 laminated on a second face 12B of the middle layer 12. The PSA sheet 10 is constituted as a multi-layered sheet wherein these middle layer 12, release layer 14 and non-releasing layer 16 have been formed by co-extrusion. In the example shown in Figure 1, the PSA sheet 10 having a long tape shape is wound in a roll, with the release layer 14 facing outward.

The middle layer 12 is adhesive at 23 °C, and preferably exhibits an adhesive strength of 1.0 N/20mm or greater (typically 1.0 N/20mm or greater up to 50.0 N/20mm) when measured by the method described later. The release layer 14 is releasable from the first face 12A of the middle layer 12 and is typically non-adhesive at 23 °C. By peeling off this release layer 14 from the middle layer 12, the first face 12A can be used as an adhesive surface (i.e., it can be pressured-bonded to an adherend).

The non-releasing layer 16 is different from the release layer 14 and is not intended to be releasable from the middle layer 12. In a typical embodiment of the art disclosed herein, at 23 °C, it is extremely difficult to peel off the first face (the middle-layer-side surface) 16A of the non-releasing layer 16 from the face 12A of the middle layer 12 without at least either the middle layer 12 or non-releasing layer 16 suffering damage (cohesive failure in the middle layer 12, tearing in the non-releasing layer 16, etc.). In the example shown in Figure 1, the non-releasing layer 16 (more specifically, the second face 16B thereof) is non-adhesive at 23 °C. Upon removal of the release layer 14 from the middle layer 12, a PSA sheet 10 in such an embodiment can be preferably used as an adhesively single-faced PSA film (e.g., a PSA film for surface protection) 18 comprising a non-releasing layer 16 as its substrate.

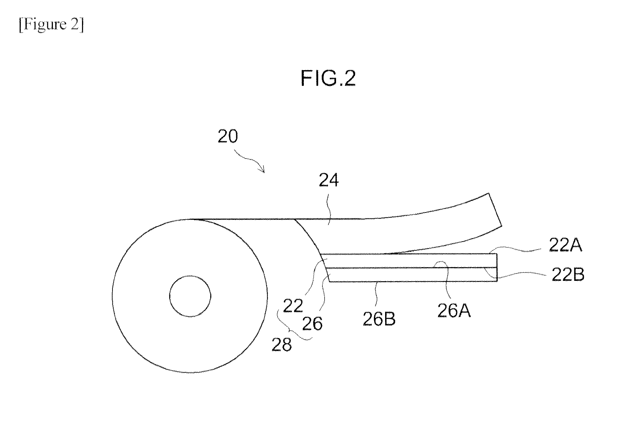

Figure 2 schematically shows another example of typical constitutions of the PSA sheet provided by the present invention. This PSA sheet 20 comprises a middle layer 22 comprising an acrylic block copolymer as its base polymer, a release layer 24 laminated on a first face 22A of the middle layer 22, and a non-releasing layer 26 laminated on a second face 22B of the middle layer 22. The PSA sheet 20 is constituted as a multi-layered sheet wherein these middle layer 22, release layer 24 and non-releasing layer 26 have been formed by co-extrusion. In the example shown in Figure 2, the PSA sheet 20 as a long tape is wound in a roll, with the release layer 24 facing outward. The constitutions of the middle layer 22 and the release layer 24 are the same manner as those of the middle layer 12 and the release layer 14 shown in Figure 1.

The non-releasing layer 26 is different from the release layer 24 and is not intended to be releasable from the middle layer 12 (in typical, similarly to the example shown in Figure 1, at 23 °C, it is extremely difficult to peel off the first face 26A of the non-releasing layer 26 from the face 22A of the middle layer 22 without at least either the middle layer 22 or the non-releasing layer 26 suffering damage). In the example shown in Figure 2, the non-releasing layer 26 (more specifically, the second face 26B thereof) is adhesive at 23°C. With a PSA sheet 20 in such an embodiment, upon removal of the release layer 24 from the middle layer 22, the laminate of the adhesive middle layer (first PSA layer) 22 and the adhesive non-releasing layer (second PSA layer) 26 can be preferably used as an adhesively double-faced PSA film (a substrate-free PSA film) 28. In other words, in this PSA film, the first face 22A of the middle layer 22 can be used as the first adhesive surface and the second face (back face) 26B of the non-releasing layer 26 can be used as the second adhesive surface.

The middle layer in the art disclosed herein is formed of a PSA (a material that is adhesive at 23 °C) comprising an acrylic block copolymer as its base polymer (the primary component of polymer components, i.e., a component that accounts for 50 % by mass or greater). As the acrylic block copolymer, one kind can be used solely, or two or more kinds can be used in combination. Can be preferably used an acrylic block copolymer comprising at least one acrylate block (which hereinafter may be referred to as an Ac block) and at least one methacrylate block (which hereinafter may be referred to as an MAc block). For instance, preferable is a block copolymer having a structure in which Ac blocks and MAc blocks are positioned alternately. The total number of Ac blocks and MAc blocks is preferably 3 or larger (e.g., 3 to 5).

The Ac block typically comprises an acrylic acid ester as its primary monomer (i.e., a component that accounts for 50 % by mass or greater of the monomer units constituting the block). An acrylic acid ester may account for 75 % by mass or greater of the monomer units, or for 90 % by mass or greater. In a preferable embodiment, the monomer units constituting the Ac block (which may be at least one Ac block in an acrylic block copolymer comprising two or more Ac blocks, or all of its Ac blocks) contained in the acrylic block copolymer consist essentially of only one, two or more kinds (typically one kind) of acrylic acid ester. Alternatively, the Ac block may be a copolymer of an acrylic acid ester and another monomer (e.g., a methacrylic acid ester).

Examples of an acrylic acid ester constituting the Ac block include the following:
Aliphatic hydrocarbon esters of acrylic acid; for example, methyl acrylate, ethyl acrylate, n-propyl acrylate, isopropyl acrylate, n-butyl acrylate, isobutyl acrylate, tert-butyl acrylate, n-pentyl acrylate, n-hexyl acrylate, n-heptyl acrylate, n-octyl acrylate, 2-ethylhexyl acrylate, nonyl acrylate, isononyl acrylate, decyl acrylate, dodecyl acrylate, stearyl acrylate, etc.
Alicyclic hydrocarbon esters of acrylic acid; for example, cyclohexyl acrylate, isobornyl acrylate, etc.
Aromatic hydrocarbon esters of acrylic acid; for example, phenyl acrylate, benzyl acrylate, toluyl acrylate, etc.

Acrylic acid esters of alcohols containing ether bonds; for example, alkoxyalkyl acrylates such as 2-methoxyethyl acrylate, 2-methoxybutyl acrylate, etc.; acrylates containing epoxy groups such as glycidyl acrylate, methylglycidyl acrylate, etc.
Acrylates containing hydroxyl groups; for example, hydroxyalkyl acrylates such as 2-hydroxyethyl acrylate, 2-hydroxypropyl acrylate, 3-hydroxypropyl acrylate, 2-hydroxybutyl acrylate, 4-hydroxybutyl acrylate, etc.
Acrylates containing amino groups; for example, 2-aminoethyl acrylate, N,N-dimethylaminoethyl acrylate, N,N-dimethylaminopropyl acrylate, etc.
Acrylates containing alkoxysilyl groups; for example, 3-acryloxypropyltrimethoxysilane. 3-acryloxypropyltriethoxysilane, 3-acryloxypropylmethyldunethoxysilane, 3-acryloxypropylmethyldiethoxysilane, etc.
Alkylene oxide adducts of acrylic acid; for example, ethylene oxide adducts represented by formula: CH₂=CHCOO(CH₂CH₂O)ₙH (n is, for example, 1 to 10).

Of the monomers constituting the Ac block, 50 % by mass or greater (or 75 % by mass or greater, or essentially all) is preferably a hydrocarbon ester of acrylic acid, which is particularly preferable to be an aliphatic hydrocarbon ester of acrylic acid (an alkyl acrylate). Examples of such an alkyl acrylate include alkyl acrylates having an alkyl group with 1 to 20 (preferably 1 to 14) carbon atoms.

In a preferable embodiment, of the monomers constituting the Ac block, 50 % by mass or greater (or 75 % by mass or greater, or essentially all) is an alkyl acrylate having an alkyl group with 1 to 10 carbon atoms. Especially preferable alkyl acrylates include n-butyl acrylate (BA), 2-ethylhexyl acrylate (2EHA), tert-butyl acrylate, and methyl acrylate. For example, the monomers preferably employed to constitute the Ac block may consist essentially of BA alone, 2EHA alone, both BA and 2EHA, or the like.

The MAc block typically comprises a methacrylic acid ester as its primary monomer (i.e., a component that accounts for 50 % by mass or greater of the monomer units constituting the block). Of the monomer units, a methacrylic acid ester may account for 75 % by mass or greater or for 90 % by mass or greater. In a preferable embodiment, the monomer units constituting the MAc block (which may be at least one MAc block in an acrylic block copolymer comprising two or more Ac blocks, or all of its Ac blocks) contained in the acrylic block copolymer consist essentially of only one, two or more kinds (typically one kind) of methacrylic acid ester. Alternatively, the MAc block may be a copolymer of a methacrylic acid ester and another monomer (e.g., an acrylic acid ester).

Examples of a methacrylic acid ester constituting the MAc block include the following:
Aliphatic hydrocarbon esters of methacrylic acid; for example, methyl methacrylate, ethyl methacrylate, n-propyl methacrylate, isopropyl methacrylate, n-butyl methacrylate, isobutyl methacrylate, tert-butyl methacrylate, n-pentyl methacrylate, n-hexyl methacrylate, n-heptyl methacrylate, n-octyl methacrylate, 2-ethylhexyl methacrylate, nonyl methacrylate, isononyl methacrylate, decyl methacrylate, dodecyl methacrylate, stearyl methacrylate, etc.
Alicyclic hydrocarbon esters of methacrylic acid; for example, cyclohexyl methacrylate, isobornyl methacrylate, etc.
Aromatic hydrocarbon esters of methacrylic acid; for example, phenyl methacrylate, toluyl methacrylate, benzyl methacrylate, etc.

Methacrylic acid esters of alcohols containing ether bonds; for example, alkoxyalkyl methacrylates such as 2-methoxyethyl methacrylate, 2-methoxybutyl methacrylate, etc.; and methacrylates containing epoxy groups such as glycidyl methacrylate, methylglycidyl methacrylate, etc.
Methacrylates containing hydroxyl groups; for example, hydroxyalkyl methacrylates such as 2-hydroxyethyl methacrylate, 2-hydroxypropyl methacrylate, 3-hydroxypropyl methacrylate, 2-hydroxybutyl methacrylate, 4-hydroxybutyl methacrylate, etc.
Methacrylates containing amino groups; for example, 2-aminoethyl methacrylate, N,N-dimethylaminoethyl methacrylate, N,N-dimethylaminopropyl methacrylate, etc.
Methacrylates containing alkoxysilyl groups; for example, 3-methacryloxypropyltrimethoxysilane, 3-methacryloxypropyltriethoxysilane, 3-methacryloxypropylmethyldimethoxysilane, 3-methacryloxypropylmethyldiethoxysilane, etc.
Alkylene oxide adducts of methacrylic acid; for example, ethylene oxide adducts represented by formula: CH₂=C(CH₃)COO(CH₂CH₂O)ₙH (n is, for example, 1 to 10).

Of the monomers constituting the MAc block, 50 % by mass or greater (or for 75 % by mass or greater, or essentially all) is preferably a hydrocarbon ester of methacrylic acid, witch particularly preferable being an aliphatic hydrocarbon ester of methacrylic acid (an alkyl methacrylate). Examples of such an alkyl methacrylate include alkyl methacrylates having an alkyl group with 1 to 20 (preferably 1 to 14) carbon atoms.

In a preferable embodiment, of the monomers constituting the MAc block, 50 % by mass or greater (or 75 % by mass or greater, or essentially all) is an alkyl methacrylate having an alkyl group with 1 to 4 carbon atoms. Especially preferable alkyl methacrylates include methyl methacrylate (MMA) and ethyl methacrylate (EMA). For example, the monomers preferably employed may consist essentially of MMA alone, EMA alone, both MMA and EMA, or the like.

In the art disclosed herein, the acrylic block copolymer as the base polymer of the middle layer may be a copolymer comprising A blocks and B blocks positioned alternatively such as type AB, type ABA, type ABAB, type ABABA, etc., with the A block having been formed of a polymer having a rigid structure with excellent cohesive strength and elasticity, and the B block having been formed of a polymer having a flexible structure with excellent viscosity. A PSA comprising as its base polymer an acrylic block copolymer having such a structure may form a middle layer combining cohesive strength and elasticity as well as viscosity at high levels. A PSA having such a composition is preferable because it may be of excellent extrudability. Preferably used is an acrylic block copolymer having a structure in which A blocks are positioned at both terminals of a molecule (such as type ABA, type ABABA, etc.). An acrylic block copolymer having such a structure is preferable because it is likely to have a good balance of cohesiveness and thermoplasticity.

When the acrylic block copolymer comprises two or more A blocks, the compositions, molecular weights (polymerization degrees), structures, etc., of these A blocks can be the same with or different from each other. When the acrylic block copolymer comprises two or more B blocks, the same is true with the B blocks.

As the A block, can be preferably used an MAc block as those described above. As the B block, can be preferably used an Ac block as those described above. In a preferable embodiment, the acrylic block copolymer is a triblock copolymer having a structure of MAc-Ac-MAc (type ABA). For instance, can be preferably used a triblock copolymer with two MAc blocks having essentially identical monomer compositions.

The proportions of the mass of the MAc block (when two or more MAc blocks are contained, their total mass) and the mass of the Ac block (when two or more Ac blocks are contained, their total mass) contained in the acrylic block copolymer can be in a range such that the mass ratio MAc block/Ac block is 4/96 to 90/10 (usually 7/93 to 80/20, preferably 10/90 to 70/30, e.g., 20/80 to 50/50). When the proportion of the MAc block is excessively large, the adhesive strength may tend to be insufficient. When the proportion of the Ac block is excessively large, the cohesive strength or the elasticity may tend to be insufficient. As a result, the balance of the adhesive properties may be disrupted, or the releasability of the release layer relative to the middle layer may become insufficient.

As the acrylic block copolymer, in usual, can be suitably used an acrylic block copolymer having a weight average molecular weight (Mw) of about 3 × 10⁴ to 30 × 10⁴. The acrylic block copolymer has a Mw of preferably about 3.5 × 10⁴ to 25 × 10⁴ or more preferably about 4 × 10⁴ to 20 × 10⁴ (e.g., 5 × 10⁴ to 15 × 10⁴). When the Mw of the acrylic block copolymer is too small, the adhesive properties (e.g., cohesiveness) may tend to decrease, or the releasability of the release layer may become insufficient. When the Mw is too large, the thermoplasticity of the acrylic block copolymer may become insufficient, whereby the co-extrudability of the middle layer may tend to decrease.

The Mw of the acrylic block copolymer described here refers to a value based on standard polystyrene that is determined by gel permeation chromatography (GPC) with respect to a sample prepared by dissolving the copolymer in a suitable solvent (e.g., tetrahydrofuran (THF)). In particular, by carrying out GPC measurement under the conditions described later in Examples, can be determined the Mw of the acrylic block copolymer.

The Ac block may have a glass transition temperature (Tg) of, for example, -80 °C to -10 °C. Usually, a preferable Ac block has a Tg of -75 °C to -20 °C (e.g., -75 °C to -50 °C). The Tg of the MAc block may be, for example, 40 °C to 240 °C. Usually, a preferable MAc block has a Tg of 60 °C to 230°C (e.g., 80 °C to 230 °C). The Tg's of the Ac block and the MAc block refer to the values determined from the FOX equation based on the Tg values of the homopolymers of the respective monomers constituting the blocks and the mass fractions (copolymerization ratios) of the monomers. As the Tg values of homopolymers, should be used the values listed in a known publication, either "Handbook of Pressure Sensitive Adhesive Technology" by Nikkan Kogyo Shimbun Ltd., or "Polymer Handbook" by Wiley-Interscience. For example, as the Tg values of homopolymers in the art disclosed herein, -70 °C is used for 2EHA, -54 °C for BA, and 105 °C for MMA.

In the acrylic block copolymer of the art disclosed herein, a monomer (the other monomer) besides the acrylic acid ester and the methacrylic acid ester may be copolymerized. Examples of the other monomer include, cyano-group-containing vinyl compounds such as acrylonitrile, methacrylonitrile, etc.; vinyl esters such as vinyl acetate, vinyl propionate, etc.; aromatic vinyl compounds such as styrene, α-methylstyrene, etc.; vinyl-group-containing heterocyclic compounds such as N-vinylpyrrolidone, etc.; amide-group-containing vinyl compounds such as acrylamide, methacrylamide, etc.; and so on. Other examples include acidic-group-containing monomers such as unsaturated monocarboxylic acids such as acrylic acid, methacrylic acid, etc.; unsaturated dicarboxylic acids such as maleic acid, fumaric acid, etc.; salts (sodium salts, potassium salts, etc.) of these monocarboxylic acids or dicarboxylic acids; unsaturated dicarboxylic acid anhydrides such as maleic acid anhydride, etc. Yet other examples include alkyl acrylates having a structure where a fluoroalkyl group is bonded to an acryloyl group such as methyl (trifluoromethyl)acrylate, ethyl 2-(trifluoromethyl)acrylate, ethyl 2-(perfluoroethyl)acrylate, methyl (diperfluoromethyl)acrylate, ethyl 2-(perfluorohexyl)acrylate, ethyl 2-(perfluorodecyl)acrylate, ethyl 2-(perfluorohexadecyl)acrylate, 2-(perfluorobutyl)ethyl 2-(perfluoroethyl)acrylate, 2-(perfluoroethyl)methyl 2-(perfluoromethyl)acrylate, etc.; fluoroalkyl acrylates; and fluoroalkyl methacrylates.

The other monomer can be used for a purpose of, for instance, controlling the properties (adhesive properties, extrudability, etc.) of the middle layer. A structural moiety arisen from such a monomer may be typically included in at least one block (which may be either an Ac block or an MAc block) constituting the acrylic block copolymer as a random copolymer, block copolymer, graft copolymer, etc. It is noted, however, that when the other monomer is used in too large an amount, the transparency of the middle layer may be impaired, or the releasability of the release layer may become insufficient. Usually, the other monomer is used in an amount corresponding to suitably 20 % by mass or smaller of all monomers constituting the acrylic block copolymer, preferably 10 % by mass or smaller, or more preferably 5% by mass or smaller. In a preferable embodiment, the acrylic block copolymer is essentially free of the other monomers. In particular, the acidic-group-containing monomer is not substantially copolymerized in a preferable acrylic block copolymer. Such a middle layer comprising an acrylic block copolymer as its base polymer is preferable because it may be naturally less corrosive to an adherend. For instance, in a PSA sheet for use involving adhesion to an adherend having a transparent electrode such as ITO (indium tin oxide), etc., it is especially meaningful that the middle layer (adhesive surface) exhibits low corrosiveness to adherends. It is advantageous that the acidic-group-containing monomer is not substantially copolymerized in the acrylic block copolymer, also in order to avoid an excessive increase in the melt viscosity of the middle layer.

Such an acrylic block copolymer can be readily synthesized by a known method (for example, see Patent Document 1, Patent Document 5), or a commercial product is readily available. Examples of the commercial product include, trade name "LA POLYMER" series (e.g., those with product numbers LA2140e, LA2250, etc.) available from Kraray Co., Ltd. As the method for synthesizing an acrylic block copolymer, living polymerization can be preferably employed. According to living polymerization, its own excellent structure control allows synthesis of an acrylic block copolymer having excellent thermoplasticity (e.g., good extrudability) while keeping the transparency and weatherability inherent in the acrylic polymer. Since it is able to control the molecular weight distribution in a narrow range, insufficiency in the cohesiveness due to the presence of low molecular weight components (e.g., migration of the adhesive to the release layer) can be suppressed to achieve a PSA sheet having a release layer with excellent releasability.

The middle layer in the art disclosed herein can contain as necessary a component other than the acrylic block copolymer for a purpose of controlling the adhesive properties, etc. Such an optional component may be, for example, a polymer (which may be an oligomer having a relatively low polymerization degree (e.g., having a weight average molecular weight of at most 5000, typically 500 to 5000)) other than the acrylic block copolymer. Examples of such a polymer (which hereinafter may be referred to as an optional polymer) include acrylic polymers not having block structures such as homopolymers of acrylic monomers, random copolymers comprising as its primary monomer an acrylic monomer (which may be one, two or more kinds selected from the acrylic acid esters and methacrylic acid esters described earlier), etc.; olefinic resins; silicone-based polymers; and so on.

From the standpoint of the transparency of the middle layer, when the optional polymer is contained in the middle layer, a polymer having good miscibility to the acrylic block copolymer is preferably selected. An optional polymer is preferably added in an amount that does not greatly impair the transparency of the middle layer. In usual, the amount of the optional polymer is suitably 50 parts by mass or smaller relative to 100 parts by mass of the acrylic block copolymer, preferably 10 parts by mass or smaller, or more preferably 5 parts by mass or smaller. In a preferable embodiment, the middle layer is essentially free of polymers other than the acrylic block copolymer.

Tackifying resins are included in other examples of an optional component added to the middle layer for a purpose of controlling the adhesive properties (e.g., increasing the adhesive strength), etc. The types of tackifying resins are not particularly limited and can be used, for example, one, two or more kinds suitably selected from tackifying resins generally used in PSA, including hydrocarbon-based tackifying resins, terpene-based tackifying resins, rosin-based tackifying resins, phenol-based tackifying resins, epoxy-based tackifying resins, polyamide-based tackifying resins, elastomer-based tackifying resins, ketone-based tackifying resins, and so on.

Hydrocarbon-based tackifying resins include various hydrocarbon-based resins such as aliphatic hydrocarbon resins, aromatic hydrocarbon resins (xylene resins, etc.), alicyclic hydrocarbon resins, aliphatic-aromatic petroleum resins (styrene-olefin-based copolymers, etc.), aliphatic-alicyclic petroleum resins, hydrogenated hydrocarbon resins, coumarone-based resins, coumarone-indene-based resins, and the like. Terpene-based tackifying resins include terpene-based resins such as α-pinene polymers, β-pinene polymers, etc.; modified terpene-based resins (e.g., terpene-phenol-based resins, styrene-modified terpene-based resins, hydrogenated terpene-based resins, etc.) obtained by subjecting these terpene-based resins to modification (phenol modification, aromatic modification, hydrogenation modification, etc.); and so on. Rosin-based tackifying resins include unmodified rosins (raw rosins) such as gum rosin, wood rosin, etc.; modified rosins (hydrogenated rosins, disproportioned rosins, polymerized rosins, other chemically modified rosins, etc.) obtained by subjecting these unmodified rosins to hydrogenation, disproportionation, polymerization, etc.; various other rosin derivatives; and so on. Examples of phenol-based tackifying resins include resol-type and novolac-type alkylphenols.

From the standpoint of the transparency of the middle layer, when a tackifying resin as those listed above is contained in the middle layer, the tackifying resin having good miscibility to the acrylic block copolymer is preferably selected. A tackifying resin is preferably added in an amount that does not greatly impair the properties such as the transparency, weatherability and cohesiveness of the middle layer as well as the releasablity of the release layer, etc. In usual, the tackifying resin is added in an amount corresponding to suitably 100 parts by mass or smaller relative to 100 parts by mass of the acrylic block copolymer, preferably 80 parts by mass or smaller, or more preferably 60 parts by mass or smaller. The PSA sheet disclosed herein may be preferably made in an embodiment where the middle layer is essentially free of tackifying resins.

The middle layer in the art disclosed herein may contain, as necessary, additives including fillers such as calcium oxide, magnesium oxide, silica, zinc oxide, titanium oxide, etc.; coloring agents such as dyes, pigments, etc.; weathering stabilizers such as light stabilizers (e.g., hindered amine-based light stabilizers), ultraviolet light absorbers, antioxidants, etc.; and polyethylene imine. For example, the middle layer may be constituted to contain a crosslinking agent that is set to undergo a crosslinking reaction by ultraviolet light so that after a PSA sheet is formed by co-extruding the middle layer along with a release layer and a non-releasing layer, irradiation of a suitable amount of ultraviolet light to the PSA sheet induces the crosslinking reaction in the middle layer, thereby allowing control of the adhesive properties. As the crosslinking agent, other than these ultraviolet light curable kinds, can be used a crosslinking agent that is set to undergo a crosslinking reaction by visible light or electron beam. When the middle layer is crosslinked by using such a crosslinking agent, it is desirable that the middle layer contains no light-blocking materials such as fillers, pigments, etc., or the amounts of these materials are suppressed at low levels (e.g., 5 % by mass or smaller of the total mass of the middle layer, preferably 1 % by mass or smaller). This is also beneficial in view of taking advantage of the transparency of the acrylic block copolymer. From the standpoint of the fluidity during extrusion, it is preferable that the acrylic block copolymer contained in the middle layer stays substantially uncrosslinked at least prior to the extrusion of a PSA sheet.

The release layer in the art disclosed herein is a layer that is laminated on the first face of the middle layer and is releasable from the middle layer. This release layer is typically non-adhesive at 23 °C. It is preferable that the release layer can function as a release liner for the middle layer. For instance, it is preferable that the release layer can undergo interfacial peeling at the interface with the middle layer. It is also preferable that it can be peeled off continuously from the middle layer without splitting or tearing along the way.

The release layer preferably exhibits a peel strength of 5.0 N/20mm or smaller when the release layer is peeled off from the middle layer at a measurement temperature of 23 °C, a tensile speed of 10 m/min, and a peel angle of 180°. When the peel strength is 5.0 N/20mm or smaller, the initial peeling of the release layer (operation of separating the middle layer surface and the release layer surface at a part of a PSA sheet to initiate peeling of the release layer) is easy and the subsequent peeling can be smoothly carried out; and therefore, it provides excellent adhesion handling. The release layer more preferably exhibits a peel strength of 2.0 N/20mm or smaller (e.g., 1.0 N/20mm or smaller). Since the ease of handling of a PSA sheet may be reduced also when the peel strength of the release layer is too small, it is usually preferable that the peel strength is about 0.01 N/20mm or greater. Specific operations in measurement of the peel strength can be carried out, for example, in accordance with the contents of Examples described later.

In a preferable embodiment, at least the middle-layer-side surface (i.e., the release face) of the release layer is constituted with a release-face-forming composition comprising a polyolefin as its primary component. A release layer of such a constitution is preferable because it is likely to exhibit excellent releasability from the middle layer. The polyolefin may be, for instance, a homopolymer of an α-olefin, a copolymer of two or more kinds of α-olefin, a copolymer of one, two or more kinds of α-olefin and another vinyl monomer, and so on. An α-olefin with 2 to 12 carbon atoms can be preferably used. Examples of the polyolefin include polyethylenes (PE), polypropylenes (PP), poly-1-butenes, ethylene-propylene copolymers, ethylene-1-butene copolymers, propylene-1-butene copolymers, ethylene-propylene-1-butene copolymers, copolymers of ethylene and/or propylene as well as an α-olefin having 5 to 12 carbon atoms, ethylene-unconjugated-diene copolymers, propylene-unconjugated-diene copolymers, 1-butene-unconjugated-diene copolymers, ethylene-1-butene-unconjugated-diene copolymers, and so on. The composition may contain solely one kind of these polyolefins, or two or more kinds in combination.

Preferred examples of the release-face-forming composition include a composition (PE composition) wherein the primary monomer of the polyolefin is ethylene and a composition (PP composition) wherein the primary monomer is propylene. The PE composition may be a homopolymer of ethylene, or a copolymer of ethylene as the primary monomer and another α-olefin (e.g., an α-olefin having 3 to 12 carbon atoms). Preferred examples of the α-olefin include propylene, 1-butene, 1-hexene, 4-methyl-1-pentene, 1-octene, and the like. As the PE composition, can be used any of low density polyethylenes (LDPE), linear low density polyethylenes (LLDPE) and high density polyethylenes (HDPE). The PP composition may be a homopolymer of propylene (i.e., a homopolypropylene), or a copolymer of propylene as the primary monomer and another α-olefin (e.g., an α-olefin having 2, or 4 to 12 carbon atoms). As the homopolypropylene, can be used any of isotactic polypropylenes, sindiotactic polypropylenes and atactic polypropylenes.

In a preferable embodiment, at least the middle-layer-side surface of the release layer is constituted with a PE composition. For example, can be preferably used an LDPE and/or an LLDPE. From the standpoint of being able to form a release layer having greater releasability, an LLDPE is especially preferable.

The release layer may have a single-layered structure or a multi-layered structure with two or more layers (typically, 2 to 5 layers, e.g., 2 to 3 layers). A single-layered release layer is advantageous in that co-extrusion of a PSA sheet is facile. In such a single-layered release layer, it is preferable that its entirety is formed with a release-face-forming composition comprising a polyolefin as its primary component as described above. A release layer having such a composition is advantageous also in terms of stability of film formation during extrusion and ease of disposal (e.g., incineration) of the release layer separated from the middle layer (i.e., after use).

When the release layer constituting the PSA sheet disclosed herein is multi-layered, of the sublayers, the sublayer closest to the middle layer is preferably formed of a release-face-forming composition comprising the polyolefin as its primary component. The other sublayers may be of any compositions as long as they allow extrusion of the PSA sheet disclosed herein, and various conventional thermoplastic resin compositions can be used without particular limitations. Such a multi-layered release layer can combine, for instance, excellent releasability from an adhesive surface and good printability on the back face at high levels, by selecting, for the layer constituting the back face (the face opposite to the release face; i.e., the face that forms an exposed surface of the PSA sheet) of the release layer, a sublayer formed of a composition that provides good printability.

For a purpose of preventing deterioration, the release layer may contain, for example, weathering stabilizers such as light stabilizers (e.g., hindered amine-based light stabilizers), ultraviolet light absorbers, antioxidants, etc.; fillers such as calcium oxide, magnesium oxide, silica, zinc oxide, titanium oxide, etc.; coloring agents such as dyes, pigments, etc.; and so on as necessary. Examples of other additives that can be contained in the release layer as necessary include anti-gumming agents, lubricants, anti-blocking agents, foaming agents, polyethyleneimine, and so on. The PSA sheet disclosed herein can be preferably made in an embodiment where a low molecular weight compound (e.g., aliphatic acid amide, etc.) that bleeds to the release layer surface to provide better release has not been specifically added to the release layer constituting the PSA sheet. In other words, even in such an embodiment, the release layer can be adequately peeled off from the adhesive surface. This is preferable because contamination of the adhesive surface by the bleeding material as well as contamination of an adherend to which this adhesive surface is adhered can be prevented from occurring. When the PSA sheet disclosed herein is used for a purpose involving its eventual removal such as surface protection of an optical element, an electronic part, etc., it is especially advantageous that contamination of an adherend can be prevented to a high degree as described above.

The non-releasing layer in the art disclosed herein is described next. This non-releasing layer is a layer that is laminated on a second face of the middle layer and is not intended to be releasable from the second face. The non-releasing layer is typically a layer that is impossible or extremely difficult to be peeled off from the middle layer without at least either the middle layer or the non-releasing layer suffering damage. The scope of the non-releasing layer described herein encompasses, for instance, given that a non-releasing layer is attempted to be peeled off from a middle layer by applying the same conditions as the peel strength measurement in the evaluation of releasability of a release layer in Examples described later, non-releasing layers that are peeled off with accompanying cohesive failure in the middle layers, non-releasing layers that happen to tear off at an initial or an intermediate stage of peeling, non-releasing layers having peel strength exceeding 5.0 N/20mm (preferably exceeding 10.0 N/20mm) when measured under the conditions of the peel strength measurement described above, non-releasing layers that cannot be subjected to the evaluation of releasability because their ends cannot be peeled from middle layers, and so on.

The non-releasing layer may be constituted with various compositions (non-releasing-layer-forming compositions) that can be co-extruded with middle layers and release layers, and are able to form non-releasing layers that exhibit sufficient adhesion relative to the middle layers upon the co-extrusion. Usually, as the primary component of the composition, can be preferably used a resin containing a polar group such as an acrylic resin, a polyester resin, a polycarbonate resin, a polyamide resin, a polyurethane resin, and the like. As an example of a non-releasing-layer-forming composition that is preferable with respect to its capability to form a non-releasing layer having excellent transparency, can be given a composition comprising an acrylic resin as its primary component. Such a composition is preferable because co-extrusion with a PSA layer comprising an acrylic block copolymer as its base polymer may produce a non-releasing layer that exhibits high adhesion to the PSA layer. The acrylic resin may be a homopolymer of an acrylic monomer (including acrylic acid esters, methacrylic acid esters, etc.), or a copolymer (a random copolymer, a block copolymer, a graft copolymer, etc.) of two or more kinds of acrylic monomers. The non-releasing-layer-forming composition may comprise solely one of these polar-group-containing resins, or may be a mixture of two or more kinds of resins, or may comprise a resin in which two or more kinds of components (monomers) that would constitute a polar-group-containing resin have been copolymerized. The non-releasing-layer-forming composition may be a mixture of the polar-group-containing resin and a resin with low polarity (e.g., a polyolefin resin), or may comprise a resin in which components constituting the polar-group-containing resin and components (e.g., α-olefin having 2 to 12 carbon atoms such as ethylene, propylene, etc.) constituting a resin with low polarity have been copolymerized. The type of the copolymerization can be either random, block or graft. Of the total mass of the non-releasing-layer-forming composition, the amount of the polar-group-containing resin accounts for preferably 20 % by mass or greater, more preferably 35 % by mass or greater, or yet more preferably 50 % by mass or greater. The non-releasing-layer-forming composition may consist essentially of a polar-group-containing resin.

In a preferable embodiment, the non-releasing-layer-forming composition is a thermoplastic resin composition comprising an acrylic block copolymer as its base polymer. A PSA sheet comprising a non-releasing layer of such a composition is preferable because the laminate (which may be used as an adhesively single-faced on-substrate PSA film or an adhesively double-faced substrate-free PSA film) of a middle layer and the non-releasing layer may be of excellent transparency, taking advantage of the properties of the acrylic block copolymer. Also, it is preferable because when co-extruded with a PSA layer, it may exhibit high adhesion to the PSA layer. As the acrylic block copolymer that is the base polymer of the non-releasing layer, can be preferably used acrylic block copolymers having the same structures as the acrylic block copolymers used as the base polymers of middle layers. For instance, preferable is an acrylic block copolymer comprising an Ac block and an MAc block (more preferable is a triblock copolymer having a structure of MAc-Ac-MAc). Examples of monomers usable in synthesis of each block may include the same monomers as those described in relation to the acrylic block polymer used as the base polymer of the middle layer.

In a preferable embodiment of the art disclosed herein, the non-releasing layer is non-adhesive at 23 °C. Such a non-releasing layer can be understood as a substrate layer that backs up the middle layer. As a preferred example of a material constituting such a non-adhesive non-releasing layer, can be given a composition comprising an acrylic block copolymer as its base polymer wherein the acrylic block copolymer is harder than the acrylic block copolymer that is the base polymer of the middle layer. For example, when both the non-releasing layer and the middle layer are formed of compositions comprising as the base polymers acrylic block copolymers comprising A blocks (hard blocks, e.g., MAc blocks) and B blocks (soft blocks, e.g., Ac blocks), as the acrylic block copolymer of the non-releasing layer, can be preferably used a composition that satisfies at least one as follows: when compared to the middle layer's acrylic block copolymer, at least either that the A block has a higher mass ratio, that the A block has a higher Tg value (e.g., a Tg higher by about 50 °C to 200 °C as compared to the Tg of the A block constituting the middle layer's acrylic block copolymer); and that the B block has a higher Tg value (e.g., a Tg higher by about 25 °C to 100 °C as compared to the Tg of the B block constituting the middle layer's acrylic block copolymer). As the base polymer of such a non-adhesive non-releasing layer (substrate layer), can be preferably used an acrylic block copolymer containing an A block having a Tg of 100 °C to 240 °C at about 40 % by mass to 80 % by mass.

In another preferable embodiment of the art disclosed herein, the non-releasing layer is adhesive at 23 °C. A laminate of such a non-releasing layer and a middle layer can be understood as an adhesively double-faced PSA film having a laminated structure. As a material constituting such an adhesive non-releasing layer, can be preferably used a thermoplastic resin composition comprising an acrylic block copolymer as its base polymer. In such an embodiment, as the acrylic block copolymer of the non-releasing layer (second PSA layer), can be used an acrylic block copolymer that is either harder than, softer than, or as hard as the acrylic block copolymer of the middle layer (first PSA layer). In a preferable embodiment, as the acrylic block copolymer of the non-releasing layer, is used an acrylic block copolymer that is harder than the acrylic block copolymer of the middle layer (while it is able to form an adhesive non-releasing layer). As the base polymer of such an adhesive non-releasing layer (second PSA layer), can be preferably used an acrylic block copolymer containing an A block having a Tg of -80 °C to -20 °C at 20 % by mass to 35 % by mass.

For a purpose of preventing deterioration, the non-releasing layer may contain, for example, weathering stabilizers such as light stabilizers (e.g., hindered amine-based light stabilizers), ultraviolet light absorbers, antioxidants, etc.; fillers such as calcium oxide, magnesium oxide, silica, zinc oxide, titanium oxide, etc.; coloring agents such as dyes, pigments, etc.; and so on as necessary. Examples of other additives that can be contained in the non-releasing layer as necessary include anti-gumming agents, lubricants, anti-blocking agents, foaming agents, polyethyleneimine, and so on. For example, the non-releasing layer may be constituted to contain a crosslinking agent that is set to undergo a crosslinking reaction by ultraviolet light so that after a PSA sheet is formed by co-extruding the middle layer and the release layer as well as the non-releasing layer, irradiation of a suitable amount of ultraviolet light to the PSA sheet induces the crosslinking reaction in the non-releasing layer. According to such a non-releasing layer that can be crosslinked after co-extrusion, when the non-releasing layer is adhesive, its adhesive properties can be adjusted as necessary. Alternatively, the non-releasing layer may be adhesive just as extruded, but becomes non-adhesive upon the crosslinking that causes loss of adhesiveness. From the standpoint of the fluidity during extrusion, it is preferable that the acrylic block copolymer contained in the non-releasing layer stays substantially uncrosslinked at least prior to the extrusion of a PSA sheet.

The art disclosed herein can be preferably practiced in an embodiment where either of the middle layer and the non-releasing layer contains a material such as a filler or a pigment that blocks light, or the content of the material is suppressed at a low level (e.g., to 5 % by mass or lower of the entire layer, preferably to 1 % by mass or lower). Such an embodiment allows to take better advantage of the transparency of the middle layer comprising an acrylic block copolymer as its base polymer. In a constitution where the non-releasing layer comprises an acrylic polymer (e.g., an acrylic block copolymer) as its base polymer, employing this embodiment is especially meaningful.

In the PSA sheet disclosed herein, the thickness of the middle layer is not particularly limited and can be suitably selected according to the adhesive strength, etc., desired in the middle layer. When the thickness of the middle layer is too small, a desired adhesive strength may be less likely to be obtained or it may be difficult to extrude the middle layer to have a uniform thickness. When the thickness of the middle layer is too large, the transparency of the middle layer may be impaired, or the releasability of the release layer may descend. In usual, the thickness of the middle layer is suitably about 1 µm to 100 µm, preferably 2 µm to 75 µm, or more preferably 3 µm to 50 µm (e.g., 5 µm to 30 µm).

The middle layer may have a single-layered structure or a multi-layered structure with two or more layers (typically, 2 to 5 layers, e.g., 2 to layers). A single-layered PSA layer is advantageous in that co-extrusion of a PSA sheet is facile. When it is multi-layered, each layer preferably has a thickness of 1 µm or greater (preferably 2 µm or greater, more preferably 3 µm or greater). For instance, the middle layer may be multi-layered (e.g., double-layered) where the release-layer-side surface and the non-releasing-layer-side surface have different compositions. A middle layer of such a constitution may combine, for example, higher levels of releasability of the release layer from the middle layer and adhesion (anchoring) of the middle layer to the non-releasing layer.

In the PSA sheet disclosed herein, the thickness of the release layer is not particularly limited and can be suitably selected in accordance with the embodiments of the PSA sheet manufacturing, the use, and so on. For example, when the manufactured PSA sheet is stored and transported in a roll (in a form of a PSA sheet roll), a certain level of flexibility is required in the PSA sheet and thus the thickness of the release layer is suitably about 500 µm or smaller, preferably 200 µm or smaller, or more preferably 150 µm or smaller. From the standpoint of handlings (e.g., handling of the PSA sheet, workability when peeling the release layer from the middle layer), the release layer has a thickness of suitably 5 µm or greater, preferably 10 µm or greater, or more preferably 15 µm or greater (e.g., 20 µm or greater).

In the PSA sheet disclosed herein, the thickness of the non-releasing layer is not particularly limited and can be suitably selected in accordance with the embodiments of the PSA sheet manufacturing, the use, and so on. In usual, the non-releasing layer suitably has a thickness of about 2 µm to 200 µm. When the non-releasing layer is non-adhesive and is used as the substrate for the middle layer, its thickness is preferably 5 µm to 150 µm (e.g., 8 µm to 100 µm). When the non-releasing layer is adhesive and forms, with a middle layer, an adhesively double-faced PSA film, its thickness is preferably about 2 µm to 75 µm, or more preferably 3 µm to 50 µm (e.g., 5 µm to 30 µm). The non-releasing layer may have a single-layered structure or a multi-layered structure with two or more layers (typically, 2 to 5 layers, e.g., 2 to 3 layers). A single-layered non-releasing layer is advantageous in that extrusion of a PSA sheet is facile.

The PSA sheet disclosed herein can be obtained by co-extruding compositions corresponding to a release layer, a middle layer and a non-releasing layer to form a sheet (form a film). The co-extrusion can be carried out according to an inflation method, a T-die method, etc., generally used in manufacturing various multi-layered films.

As necessary, the PSA sheet can be uni-axially stretched lengthwise (in the extruding direction) or widthwise (in the direction perpendicular to the extruding direction), or bi-axially stretched lengthwise and widthwise. The lengthwise stretch ratio can be, for example, 1.01 to 10 (preferably 1.01 to 5, more preferably 1.01 to 3). The widthwise stretch ratio can be, for example, 1.01 to 8 (preferably 1.01 to 4, more preferably 1.01 to 2.5). The stretching can be performed in one step per axis, or in two or more steps in accordance with the intended use of the PSA sheet. For example, the stretch ratio of a first step can be 1.01 to 4 and the stretch ratio of a second step can be 1.01 to 2.5. The temperature at which stretching is performed is not particularly limited. From the standpoint of the stretching ability, etc., relative to the glass transition temperature (Tg) of the polymer constituting the release layer, stretching can be performed at a temperature of about (Tg - 20) °C to (Tg + 50) °C.

In another preferable embodiment of the PSA sheet disclosed herein, the middle layer exhibits an adhesive strength relative to a SUS plate (i.e., an adhesive strength required to peel off the first face of the middle layer from the SUS plate) of 1.0 N/20mm or greater at a measurement temperature of 23 °C, a tensile speed of 300 mm/min, and a peel angle of 180°. The adhesive strength can be measured in accordance with the procedures for measuring adhesive strength in Examples described later with reference to JIS Z 0237(2000).

The preferable range of the adhesive strength of the PSA sheet disclosed herein may vary depending on the embodiment of the use of the PSA sheet. For instance, when the PSA sheet is used as an adhesively double-faced PSA film (i.e., when the non-releasing layer is adhesive), the middle layer preferably exhibits an adhesive strength of 2.5 N/20mm or greater (typically 5.0 to 50.0 N/20mm). In this case, the non-releasing layer preferably exhibits an adhesive strength of 1.0 N/20mm or greater (typically 2.0 to 50.0 N/20mm) when its second face is peeled off from a SUS plate. When the PSA sheet is used as a surface protection film, the middle layer preferably exhibits an adhesive strength of 0.01 to 10.0 N/20mm.

Because the PSA sheet disclosed herein comprises an adhesive middle layer comprising as its base polymer an acrylic polymer with excellent transparency and also has a constitution suitable for keeping the adhesive surface of the middle layer clean until use (until adhesion), it can be preferably used in an embodiment where the outer appearance of the middle layer may be visually observed. For instance, in a constitution where the non-releasing layer is adhesive, it is preferred as a PSA sheet used for adhering parts, with at least one part being light-transmitting, for example adhering optical parts used as constituents of a liquid crystal display panel, a plasma display panel (PDP), an organic electroluminescence (EL) display, and so forth. On the other hand, in a constitution where the non-releasing layer is non-adhesive and light-transmitting, it is preferred as a PSA sheet for surface protection used on optical parts as those listed above and other parts. Especially, it is useful as a PSA sheet applied for adhesion or surface protection of optical parts such as polarizing plates (polarizing films), wave plates, retardation plates, optical compensation films, brightening films, light-diffusing sheets, reflective sheets, and so on, which are used in liquid crystal display panels.

Several embodiments relevant to the present invention are described below although this is not to limit the present invention to these embodiments. In the following explanation, the terms "parts" and "%" are based on the mass unless specifically stated otherwise.

The Mw's in the explanation below refer to the values determined by carrying out GPC under the following: conditions:
GPC measurement conditions
   - measurement device: model number "HLC-8120GPC", TOSOH Corporation
   - columns: were used linearly connected TSKgel SuperHZM-H/HZ4000/HZ3000/HZ2000 from TOSOH Corporation.
   - column size: 6.0 mm inner diameter by 15.0 cm long, each
   - column temperature: 40 °C
   - flow rate : 0.6 mL/min
   - fluent: tetrahydrofuran
   - injection volume of sample: 20 µL
   - detector: RI (differential refractometer)
   - standard sample: polystyrene

### <Synthesis of acrylic block copolymer Ac1>

A reaction vessel of volume 2 L equipped with a nitrogen inlet, a thermometer and a stirrer was purged with nitrogen gas. To this, were added 800 mL of toluene, 2.5 mL of N,N,N',N",N"-pentamethyl diethylenetriamine, 34 mL of a 0.6 mol/L toluene solution of isobutylbis(2,6-di-t-butyl-4-methylphenoxy)aluminum, and 3.5 mL of a 1.3 mol/L toluene solution of sec-butyl lithium. To this, was added 32 mL of methyl methacrylate (MMA) and the reaction was carried out at room temperature for 3 hours. The reaction mixture was then cooled to -15 °C. To this, was added dropwise 150 mL of n-butyl acrylate (BA) over 7 hours. Subsequently, was added 32 mL of MMA, and the resulting reaction mixture was brought back to room temperature and let stirred for about 10 hours. This reaction mixture was poured into a large amount of methanol and the appeared precipitates were collected to obtain an acrylic block copolymer having a triblock structure of polyMMA-polyBA-polyMIMA. The resulting copolymer had a Mw of about 8.0 × 10⁴ and the mass ratio of the polyMMA block (the total mass of the two blocks) to the polyBA block was about 30/70. Hereinafter, this copolymer is referred to as "Ac1".

### <Synthesis of acrylic block copolymer Ac2>

A reaction vessel of volume 2 L equipped with a nitrogen inlet, a thermometer and a stirrer was purged with nitrogen gas. To this, were added 800 mL of toluene, 2.2 mL of N,N,N',N",N"-pentamethyl diethylenetriamine, 32 mL of a 0.6 mol/L toluene solution of isobutylbis(2,6-di-t-butyl-4-methylphenoxy)aluminum, and 2.2 mL of a 1.3 mol/L toluene solution of sec-butyl lithium. To this, was added 32 mL of MMA and the reaction was carried out at room temperature for 3 hours. The reaction mixture was then cooled to -30 °C. To this, was added dropwise 210 mL of 2LHA over 7 hours. Subsequently, was added 32 mL of MMA, and the resulting reaction mixture was brought back to room temperature and let stirred for about 10 hours. This reaction mixture was poured into a large amount of methanol and the appeared precipitates were collected to obtain an acrylic block copolymer having a triblock structure of polyMMA-poly2EHA-polyMMA, The resulting copolymer had a Mw of about 8.5 × 10⁴ and the mass ratio of the polyMMA block (the total mass of the two blocks) to the poly2EHA block was about 30/70. Hereinafter, this copolymer is referred to as "Ac2".

### <Example 1>

To an extrude, were added a low density polyethylene (LDPE) (trade name "PETROTHENE 190" available from TOSOH Corporation) as a release-layer-forming composition, an acrylic block copolymer (trade name "LA POLYMER LA2140e" available from Kraray Co., Ltd., with Mw of about 8.0 ×10⁴; hereinafter, this copolymer is referred to as "Ac3") that was adhesive at room temperature as a PSA-layer-forming composition (middle layer), and an acrylic block copolymer (trade name "LA POLYMER LA4285" with Mw of about 7.0 × 10⁴, available from Kraray Co., Ltd.; hereinafter, this copolymer is referred to as "Ac4") that was non-adhesive at room temperature as a substrate-layer(non-releasing layer)-forming composition; and they were melt extruded from the T-die to form a sheet having a release layer (50 µm thick), a PSA layer (10 µm thick) and a substrate layer (10 µm thick) overlaid in this order. This tri-layered sheet was wound up into a roll with the release layer facing outward, and a PSA sheet (Sample 1) was obtained in a form where the first surface of the PSA layer was supported (backed) with a non-releasable substrate and the second surface was protected with the release layer.

### <Example 2>

A PSA sheet (Sample 2) was prepared in the same way as Example 1 except that the thicknesses of the release layer, the PSA layer and the substrate layer were 100 µm, 10µm and 10µm, respectively.

### <Example 3>

As the release-layer-forming composition, was used a linear low density polyethylene (LLDPE) (trade name "SUMIKATHENE E FV401" available from Sumitomo Chemical Co., Ltd). Otherwise, a PSA sheet (Sample 3) was prepared in the same way as Example 1.

### <Example 4>

As the release-layer-forming composition, was used a homopolypropylene (PP) (trade name "NOVATEC PP FL6H" available from Japan Polypropylene Corporation). Otherwise, a PSA sheet (Sample 4) was prepared in the same way as Example 1.

### <Example5>

As the PSA-layer-forming composition, was used Ac1 (an acrylic, block copolymer having a triblock structure of polyMMA-polyBA-polyMMA). Otherwise, a PSA sheet (Sample 5) was prepared in the same way as Example 1.

### <Example 6>

As the PSA-layer-forming composition, was used Ac2 (an acrylic block copolymer having a triblock structure of polyMMA-poly2EHA-polyMMA). Otherwise, a PSA sheet (Sample 6) was prepared in the same way as Example 1.
It is noted that it was visually confirmed that the laminates of PSA layers and substrate layers constituting the PSA sheets according to Samples 1 to 6 had good transparency.

### <Example 7>

As the substrate-layer-forming composition, was used a polyethylene terephthalate (PET) (trade name "UNIPET RT543" available from Nippon Unipet Corporation). Otherwise, a PSA sheet (Sample 7) was prepared in the same way as Example 1.

### <Example 8>

A PSA sheet was prepared in the same way as Example 1 except that no release-layer-forming composition was used. That is, Ac3 as the PSA-layer-forming composition and Ac4 as the substrate-layer-forming composition were co-extruded from a T-die to form a sheet having a PSA layer of 10 µm thickness and a substrate layer of 10 µm thickness. This double-layered sheet was wound up into a roll with the substrate layer facing outward, and a PSA sheet (Sample 8) was obtained in a form where the first surface of the PSA layer was supported (backed) with a non-releasable substrate and the second surface was protected with the back face of the non-releasable substrate.

### <Example 9>

As the release-layer-forming composition, a PET (UNIPET RT543) was used. Otherwise, a PSA sheet (Sample 9) was prepared in the same way as Example 1.

### <Example 10>

As the PSA-layer-forming composition, was used an ethylene-vinyl acetate copolymer (EVA) (trade name "ULTRATHENE 633" available from TOSOH Corporation). Otherwise, a PSA sheet (Sample 10) was prepared in the same way as Example 1.

### <Example 11>

As the PSA-layer-forming composition, was used a styrene-ethylene-butylene-styrene copolymer (SEES) (trade name "TUFTEC H1221" available from Asahi Kasei Corporation). Otherwise, a PSA sheet (Sample 11) was prepared in the same way as Example 1.

With respect to Samples 1 to 11 prepared above, the following evaluations were carried out at a temperature of 23 °C and a relative humidity of 50 %.

### <Evaluation of releasability>

A 100 mm long, 20 mm wide strip was cut out from each Sample as a test piece. At a corner of the test piece, to the front and back faces of the test piece, was adhered a commercial PSA tape (e.g., trade name "DANPRON TAPE NO. 375" available from Nitto Denko Corporation). Subsequently, they were separated to peel off the release layer from the PSA layer up to the 30 mm line of the length from one end of the test piece. The partially peeled release layer of the test piece and the remaining layers (the PSA layer and the substrate layer) were held respectively with chucks of a tensile tester and peeled at a tensile speed of 10 m/min into the 180° direction to measure the peel strength required for the peeling (the peel strength of the release layer when peeled from the PSA layer).

### <Measurement of adhesive strength>

A 100 mm long, 20 mm wide strip was cut out from each Sample as a test piece. At a corner of the test piece, to the front and back faces of the test piece, was adhered a commercial PSA tape. Subsequently, they were separated to peel off the release layer from the PSA layer and expose the surface (adhesive surface) of the PSA layer.
The adhesive strength was measured based on JIS Z 0237(2000). In particular, a SUS430BA plate was used as the adherend and its surface was washed with toluene. To the adherend surface, was pressure-bonded the adhesive surface of the test piece with a 2 kg roller moved back and forth once. After 30 minutes from the pressure-bonding, the test piece was peeled into the 180° direction at a tensile speed of 300 mm/min to measure the adhesive strength.

**[Table 1]**

| Sample | | 1 | 2 | 3 | 4 | 5 | 6 | 7 |
|---|---|---|---|---|---|---|---|---|
| Release layer | Composition | LDPE | LDPE | LLDPE | PP | LDPE | LDPE | LDPE |
| | Thickness (µm) | 50 | 100 | 50 | 50 | 50 | 50 | 50 |
| PSA layer | Composition | Ac3 | Ac3 | Ac3 | Ac3 | Ac1 | Ac2 | Ac3 |
| | Thickness (µm) | 10 | 10 | 10 | 10 | 10 | 10 | 10 |
| Substrate layer | Composition | Ac4 | Ac4 | Ac4 | Ac4 | Ac4 | Ac4 | PET |
| | Thickness (µm) | 10 | 10 | 10 | 10 | 10 | 10 | 10 |
| Peel strength (N/20mm) | | 0.5 | 0.6 | 0.4 | 0.6 | 0.4 | 0.5 | 0.5 |
| Releasability | | Good | Good | Good | Good | Good | Good | Good |
| Adhesive strength (N/20mm) | | 2.8 | 2.7 | 2.6 | 2.9 | 1.0 | 3.0 | 2.8 |

**[Table 2]**

| Sample | | 8 | 9 | 10 | 11 |
|---|---|---|---|---|---|
| Release layer | Composition | — | PET | LDPE | LDPE |
| | Thickness (µm) | — | 50 | 50 | 50 |
| PSA layer | Composition | Ac3 | Ac3 | EVA | SEBS |
| | Thickness (µm) | 10 | 10 | 10 | 10 |
| Substrate layer | Composition | Ac4 | Ac4 | Ac4 | Ac4 |
| | Thickness (µm) | 10 | 10 | 10 | 10 |
| Peel strength (N/20mm) | | — | — | — | — |
| Releasability | | — | Poor | Poor | Poor |
| Adhesive strength (N/20mm) | | | — | — | — |

As shown in these Tables, Samples 1 to 6; where had been used an acrylic block copolymer as the PSA-layer-forming composition, a polyolefin (more particularly, a polyethylene or a polypropylene) as the release-layer-forming composition, and an acrylic block copolymer as the substrate-layer-forming composition; all exhibited peel strength values of 1.0 N/20mm or smaller (more specifically, 0.6 N/20mm or smaller) as well as good releasability. Samples 1 to 7 all exhibited adhesive strength values of 1.0 N/20mm or greater relative to the SUS plate. Samples where Ac2 or Ac3 had been used as the acrylic block copolymers produced adhesive strength values of 2.5 N/20mm or greater. As compared to Sample 4 where a polypropylene had been used as the release layer, Samples where polyethylenes (especially LLDPE) had been used achieved higher releasability (lower peel strengths) despite that their release layers had similar thicknesses. For example, Sample 3 where LLDPE had been used as the release-layer-forming composition was able to combine an adhesive strength of 2.5 N/20mm or greater as well as a peel strength of 0.4 N/20mm or smaller. With either of Samples 1 to 7, both when the PSA sheets adhered on both the front and back faces of Samples were separated and when the adhesive strength was measured, there were no recognizable events where the PSA layer and the substrate layer were separated at the interface. In other words, the adhesion between the PSA layer and the substrate layer was sufficient.

On the contrary, with Sample 9 that had been constructed by co-extruding a PSA layer formed of an acrylic block copolymer and a release layer formed of PET, the release layer could not be adequately peeled off from the PSA layer. With Samples 10 and 11 where the materials constituting the PSA layers had been changed from acrylic block copolymers to EVA or SEBS, despite that this had been co-extruded with a release layer formed of LDPE, the release layer could not be adequately peeled off from the PSA layer. With Sample 8 comprising no release layer, when the co-extruded PSA sheet was wound up, the adhesive surface was adhered strongly to the back face of the substrate layer (non-releasing layer) and the PSA sheet could not be unrolled (i.e., its unrolling property was poor); and therefore, it could not be subjected to the evaluations.

### <Example 12>

In this example, was prepared a PSA sheet comprising a non-adhesive non-releasing layer. In particular, to an extruder, were added LDPE (PETROTHENE 190) as the release-layer-forming composition, Ac3 as the composition for forming the first PSA layer (middle layer), and Ac1 as the composition for forming the second PSA layer (non-releasing layer); and they were melt extruded from a T-die to form a sheet having a release layer (50 µm thick), a first PSA layer (10 µm thick) and a second PSA layer (10 µm thick) overlaid in this order. This tri-layered sheet was wound up into a roll with the release layer facing outward. By this way, a PSA sheet (Sample 12) was obtained in a form such that the first PSA layer and the second PSA layer were laminated to form an adhesively double-faced PSA film wherein the first adhesive surface (the first face of the first PSA layer) and the second adhesive surface (the second face of the second PSA layer) were protected respectively with the inner face and the outer face (back face) of the release layer.

The roll of Sample 12 was unwound and the second adhesive surface of the adhesively double-faced PSA film was peeled from and exposed from the back face of the release layer. To the second adhesive surface, a 25 µm thick PET film was adhered for backing. Subsequently a 100 mm long, 20 mm wide strip was cut out to prepare a test piece for measuring the adhesive strength of the first adhesive surface (on the first PSA layer side).
In addition, the roll of Sample 12 was unwound as described above to expose the second adhesive surface and a 100 mm long, 20 mm wide strip was cut out from this to prepare a test piece for measuring the adhesive strength of the second adhesive surface (the second PSA layer side).
Using these test pieces, with respect to each of the first and second adhesive surfaces, evaluation of the releasability and measurement of the adhesive strength were carried out as described above. The obtained results are shown in Table 3.

**[Table 3]**

| Sample | | 12 |
|---|---|---|
| Release layer | Composition | LDPE |
| | Thickness (µm) | 50 |
| First PSA layer | Composition | Ac3 |
| | Thickness (µm) | 10 |
| Second PSA layer | Composition | Ac1 |
| | Thickness (µm) | 10 |
| Peel strength (N/20mm) | | 0.6 |
| Releasability | | Good |
| Adhesive strength (N/20mm) | First adhesive surface | 3.0 |
| | Second adhesive surface | 1.2 |

As shown in Table 3, it was confirmed that Sample 12, where had been used a polyolefin as the release-layer-forming composition as well as acrylic block copolymers different from each other as the first and second PSA-layer-forming compositions, exhibited a peel strength of 1.0 N/20mm or smaller (more specifically 0.6 N/20mm or smaller) as well as good releasability. Both the first adhesive surface and the second adhesive surface of Sample 12 exhibited adhesive strength values of 1.0 N/20mm or greater relative to the SUS plate. It was confirmed that despite that it was an adhesively double-faced substrate-free PSA film, the two faces (the first adhesive surface and the second adhesive surface) of the PSA film could be made to vary in the adhesive strength by a distinctive difference (of twice as high or greater), making the film useful for various purposes that can take advantage of such properties. It is noted that it was visually confirmed that the PSA film (the laminate of the first PSA layer and the second PSA layer) had good transparency.

Although specific embodiments of the present invention have been described in detail above, these are merely for illustrations and do not limit the scope of the claims. The art according to the claims includes various modifications and changes of the specific embodiments illustrated above.

## Claims

1. A pressure-sensitive adhesive sheet comprising
a middle layer that comprises an acrylic block copolymer as its base polymer and is adhesive at 23 °C,
a release layer that is laminated on a first face of the middle layer and is releasable from the middle layer, and
a non-releasing layer that is laminated on a second face of the middle layer, is non-releasable relative to the middle layer, and is adhesive or non-adhesive at 23 °C,
with these layers having been co-extruded.

2. The pressure-sensitive adhesive sheet according to Claim 1, wherein the acrylic block copolymer constituting the middle layer comprises at least one acrylate block and at least one methacrylate block.

3. The pressure-sensitive adhesive sheet according to Claim 1 or 2, wherein the acrylic block copolymer constituting the middle layer has a weight average molecular weight (Mw) of 3 × 10⁴ to 30 × 10⁴.

4. The pressure-sensitive adhesive sheet according to any one of Claims 1 to 3, wherein the non-releasing layer is formed of a non-releasing-layer-forming composition comprising an acrylic block copolymer as its base polymer.

5. The pressure-sensitive adhesive sheet according to any one of Claims 1 to 4, wherein the release layer comprises, at least on the side facing the middle layer, a surface constituted with a release-face-forming composition comprising a polyolefin as its primary component.

6. The pressure-sensitive adhesive sheet according to any one of Claims 1 to 5, wherein the release layer has a thickness of 10 µm to 500 µm.

7. The pressure-sensitive adhesive sheet according to any one of Claims 1 to 6, exhibiting a peel strength of 5.0 N/20mm or smaller when the release layer is peeled off from the middle layer at a measurement temperature of 23 °C, a tensile speed of 10 m/min and a peel angle of 180°.

8. The pressure-sensitive adhesive sheet according to any one of Claims 1 to 7, wherein the middle layer exhibits an adhesive strength relative to a SUS plate of 1.0 N/20mm or greater at a measurement temperature of 23 °C, a tensile speed of 300 mm/min and a peel angle of 180°.

9. The pressure-sensitive adhesive sheet according to any one of Claims 1 to 8, that is used for adhesion or surface protection of an optical part.
